# FASCICULE DE BREVET EUROPEEN

(11) **EP 0 947 033 B1**
(45) Date de publication et mention de la délivrance du brevet: **13.11.2002**
(21) Numéro de dépôt: 97952085.5
(22) Date de dépôt: 17.12.1997
(51) Int. Cl.: H01Q 13/08, G01N 22/00

(54) **DISPOSITIF EMETTEUR-RECEPTEUR DE MICRO-ONDES**
SENDE- UND EMPFANGSVORRICHTUNG FÜR MIKROWELLEN
MICROWAVE TRANSMITTER-RECEIVER

(30) Priorité: 18.12.1996 FR 9615568
(43) Date de publication de la demande: 06.10.1999
(73) Titulaire: COMMISSARIAT A L'ENERGIE ATOMIQUE, 75015 Paris (FR)
(72) Inventeur: ELOY, Jean-François-Résidence Rosiers Bellevue, A2, F-33170 Gradignan (FR)
(74) Mandataire: Ilgart, Jean-Christophe
(86) Numéro de dépôt international: FR9702327
(87) Numéro de publication internationale: WO98027613

(56) Documents cités:
- EP-A- 0 706 063
- EP-A- 0 727 671
- US-A- 4 855 749
- US-A- 5 056 111
- KATZENELLENBOGEN N ET AL: "EFFICIENT GENERATION OF 380 FS PULSES OF THZ RADIATION BY ULTRAFAST LASER PULSE EXCITATION OF A BIASED METAL-SEMICONDUCTOR INTERFACE" APPLIED PHYSICS LETTERS, vol. 58, no. 3, 21 janvier 1991, pages 222-224, XP000208483

## Description

L'invention concerne un dispositif émetteur-récepteur de micro-ondes.

Elle peut trouver emploi pour des applications diverses, et en particulier pour suivre l'évolution physique ou chimique d'un milieu environnant ou détecter le passage d'un objet. Il est en effet connu qu'un rayonnement traversant ce milieu est soumis à des perturbations qui dépendent de sa composition ; l'émetteur envoie alors le rayonnement sous forme d'un signal défini, et la mesure consiste à analyser le signal modifié par le milieu traversé et reçu par le récepteur. Ces procédés d'examen peuvent être utilisés continûment pour des applications de surveillance de zones à risque, ou à l'occasion d'essais ; les perturbations des milieux traversés par le rayonnement peuvent être des objets solides, mais aussi et très fréquemment des gaz, polluants de l'atmosphère, gaz de fuite, panaches d'incendies et de tirs. Ces dispositifs peuvent être associés à des bancs de mesure ou de balises d'alarme.

Des rayonnements infrarouges, de lumière visible ou ultraviolets ont déjà été employés avec de tels dispositifs, mais ils présentent l'inconvénient de devenir facilement inopérants dans des conditions défavorables : c'est ainsi que les sources de rayonnement thermique environnantes produisent elles aussi du rayonnement infrarouge qui perturbe les mesures, et que la pluie absorbe les rayonnements lumineux. De telles perturbations aveuglent les détecteurs qui analysent le signal reçu.

On préfère donc utiliser d'autres genres d'ondes. Certains systèmes comportent l'émission d'une onde porteuse dans un domaine fréquentiel restreint, ce qui présente l'inconvénient de ne permettre que des observations réduites. Il est généralement préférable de fournir un train d'ondes s'étalant sur une large bande de fréquences, ce qui impose l'emploi d'une impulsion brève pour qu'une portion importante du signal émis se situe dans les hautes fréquences. Une illustration récente d'un système radar à impulsion ultra-courte et large bande de fréquences est donnée dans l'article de W.M. Boerner et J.S. Verdi "Polarimetric UWB Radar/Sensing & Imaging" à l'occasion de la conférence UWB-SP-2, à Albuquerque en mai 1996. Des systèmes de déclenchement électroniques, optoélectroniques ou mixtes du train d'ondes ont été proposés.

L'invention est relative à un dispositif émetteur-récepteur utilisable en spectroscopie aux hautes fréquences (de l'ordre du gigahertz ou du térahertz) et qui est de conception particulièrement simple et compacte. Elle comprend un émetteur et un récepteur d'ondes électromagnétiques à antenne. Le déclenchement du train d'ondes est fait par voie opto-électronique, à l'aide d'un système générateur d'impulsions lumineuses qui illuminent une couche photo-conductrice sur laquelle l'antenne de l'émetteur est déposée ou imprimée : un court-circuit se crée dans l'antenne, qui devient active et émet le train d'ondes. Les impulsions lumineuses sont aussi transmises au récepteur, dont l'antenne est disposée de la même façon sur une couche photo-conductrice, et rendent active aussi cette antenne réceptrice, ce qui lui permet de recueillir le train d'ondes quand il a traversé le milieu d'étude et de le transmettre à des moyens d'enregistrement ou d'exploitation. L'antenne réceptrice devra souvent être rendue active un peu après l'antenne émettrice pour synchroniser le procédé en absorbant le temps de traversée du train d'ondes entre les antennes. Un dispositif opto-électronique antérieur et pouvant servir aux mêmes applications est décrit dans le brevet US 4 855 749 A, mais il présente des différences avec l'invention et des performances inférieures, comme on le développera plus loin.

Tous les éléments du dispositif peuvent être placés sur une plaquette de support unique ou un petit nombre de telles plaquettes, et une alimentation électrique unique est possible, aussi bien pour l'antenne émettrice que pour les moyens de commande, d'exploitation et d'enregistrement et que pour le moyen de génération d'impulsions lumineuses, qui peut consister en un laser. Si tel est le cas, son fonctionnement peut être rendu discontinu par une porte opto-électronique qui hache son rayonnement lumineux ou par un élément qui fait varier l'impédance des lignes optiques par lesquelles passe sa lumière.

Sous sa forme la plus générale, l'invention est relative à un dispositif émetteur-récepteur d'ondes pour examiner un milieu traversé par les ondes, comprenant un émetteur à antenne et un récepteur à antenne, un dispositif de génération d'ondes relié à l'émetteur et un dispositif de réception et d'exploitation de signaux relié au récepteur ; les antennes sont formées de portions distinctes et disposées sur une couche photo-conductrice, le dispositif de génération d'ondes comprend une alimentation électrique instaurant une différence de potentiel entre les portions de l'antenne de l'émetteur, et les dispositifs de génération d'ondes et de réception et d'exploitation de signaux comprennent des moyens de fourniture d'impulsions lumineuses aux couches photo-conductrices entre les portions des antennes ; tout cela est semblable au dispositif d'US 4 855 749, mais l'invention implique encore l'emploi de micro-lasers solidaires des couches photo-conductrices de manière à former des éléments récepteurs et émetteurs intégrés, alors que l'excitation est obtenue par des lasers ordinaires, encombrants et difficiles à régler convenablement, dans le brevet antérieur. Il faut en effet constater qu'il est difficile de transmettre un train d'ondes convenable par son intensité et sa bande de fréquences avec un tel dispositif opto-électronique. L'invention offre en revanche un dispositif composé d'éléments émetteurs et récepteurs indéréglables grâce aux micro-lasers parfaitement compatibles avec les empilements à couches photo-conductices. Un avantage connexe est que ces éléments émetteurs et récepteurs peuvent être déplacés sans difficulté si on doit mener des essais à des endroits différents. Le document EP-0 706 063 décrit l'emploi d'un micro-laser dans un dispositif opto-électronique d'émission d'un signal de télémétrie. L'invention est encore caractérisée. par l'emploi de cristaux non monocristallins pour construire les couches photo-conductrices.

L'invention va maintenant être décrite plus en détail à l'aide des figures suivantes, annexées à titre illustratif et non limitatif, afin de la mieux faire comprendre et d'en faire ressortir d'autres caractéristiques et qualités :
- la figure 1 est une vue générale d'une réalisation de l'invention,
- la figure 2 illustre certains détails d'une autre réalisation de l'invention,
- la figure 3 est une vue d'une autre réalisation de l'invention,
- les figures 4 et 5 illustrent des trains d'ondes émis et reçus,
- les figures 6 et 7 illustrent l'exploitation de ces trains d'ondes pour la mesure,
- et la figure 8 illustre une variante de la figure 1.

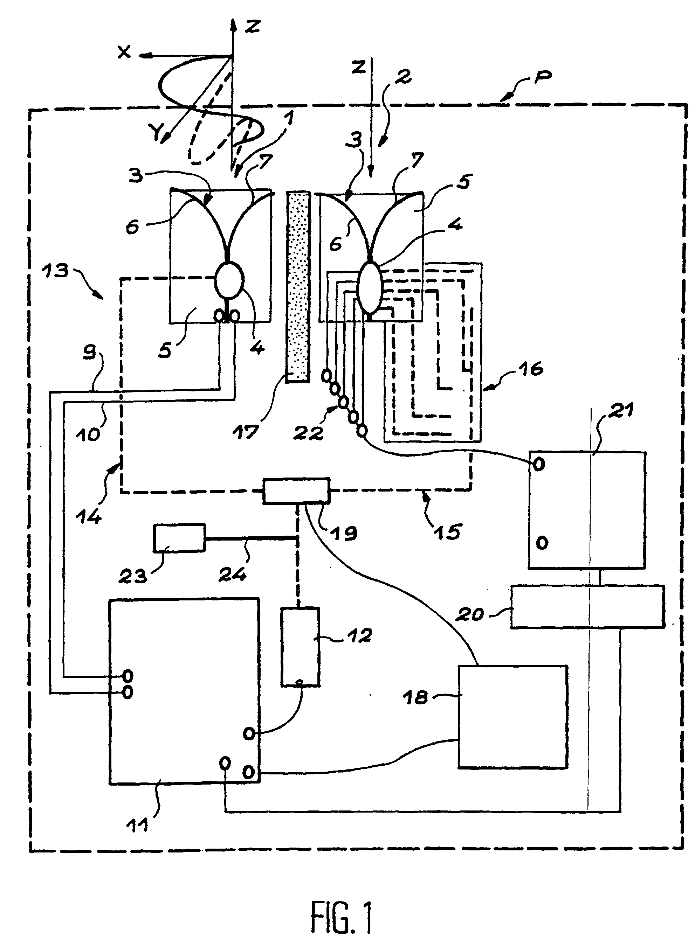

La variante de réalisation de la figure 1 est conçue pour la mesure de signaux réfléchis par le milieu d'étude. Elle comprend donc un émetteur 1 et un récepteur 2 disposés côte à côte et parallèlement, chacun d'eux ayant une antenne 3 dirigée vers l'avant de l'appareil, un micro-laser 4 situé derrière l'antenne 3, et l'ensemble est déposé sur une feuille comprenant, en tant que couche supérieure, une couche photo-conductrice 5 qui peut être en silicium dopé à l'oxygène, ou mieux en tellurure de cadmium ou arséniure de gallium.

Les antennes 3 sont composées d'au moins deux parties séparées 6 et 7 conductrices (en aluminium ou alliage de chrome et d'or), déposées sur la couche photo-conductrice 5 et dont la forme est régie en fonction du guidage d'ondes électromagnétiques qu'elles doivent assurer. Dans le cas représenté, elles sont en forme de parabole et s'écartent en s'éloignant du micro-laser 4. Des antennes en spirales ou d'une autre forme sont concevables, ainsi qu'il est connu. Les parties 6 et 7 de l'antenne 3 de l'émetteur sont reliées respectivement à deux lignes 9 et 10 d'une alimentation électrique 11 continue, qui permettent de leur imposer constamment une différence de potentiel. Si la couche photo-conductrice 5 est illuminée, elle devient conductrice de l'électricité et un court-circuit apparaît entre les deux parties 6 et 7 de l'antenne 3, ce qui déclenche l'émission d'un train d'ondes électromagnétiques.

Le rayonnement lumineux utilisé pour cela doit exciter les électrons des atomes de la couche photo-conductrice 5 pour les faire passer de la bande de valence à la bande conductrice. L'obtention de ce plasma nécessite que les photons du rayonnement possèdent une énergie permettant cette excitation en fonction de la nature chimique de la couche photo-conductrice 5.

Le micro-laser 4 a précisément pour but de réaliser l'illumination voulue dans de bonnes conditions. Il est commandé par une diode-laser 12, par l'intermédiaire d'un guide optique 13 comprenant une bifurcation dont une branche 14 comprend une ligne optique unique menant au micro-laser 4 de l'émetteur 1 ; l'autre branche 15 du guide optique 13 mène au micro-laser 4 du récepteur 2 et comprend des lignes à retard optique 16 qui permettent également d'illuminer la couche photo-conductrice 5 et de créer un court-circuit entre les parties 6 et 7 de l'antenne 3, mais avec un retard. Comme les retards des lignes 16 sont différents, l'antenne 3 du récepteur 2 devient active à plusieurs instants successifs. Un blindage 17 est disposé entre l'émetteur 1 et le récepteur 2 pour éviter les interférences électromagnétiques entre les deux antennes 3.

L'alimentation électrique 11 sert à alimenter divers éléments de l'appareil dont la diode laser 12 ainsi qu'un élément de commande 18 servant à régler le fonctionnement d'une porte opto-électronique 19 disposée sur le guide optique 13. Il s'agit d'un composant, tel qu'une cellule de Pockels, pouvant barrer le guide optique 13 à la lumière de la diode-laser 12 ou au contraire lui permettre de passer et de toucher les micro-lasers 4, selon une modification interne, concernant par exemple l'indice de réfraction ou d'extinction, qui lui est imposée par un champ électrique ou une tension de polarisation instaurée dans un cristal adjacent polarisé par la commande électronique 18. Un microprocesseur 20 reçoit également l'énergie de l'alimentation 11 et est affecté plus précisément à l'enregistrement et à l'analyse des signaux reçus par le récepteur 2, par l'intermédiaire d'un étage amplificateur 21 et de lignes de connexion 22 menant au micro-laser 4 du récepteur 2. Enfin, l'alimentation électrique 11 est reliée à un émetteur de micro-ondes 23 qui, par l'intermédiaire d'un guide 24 relié au guide optique 13 (et pouvant être de type Max-Zehnder), envoie des micro-ondes de modulation du signal fourni par la diode-laser 12. Cet émetteur 23 produit en effet un couplage entre la lumière de la diode-laser 12 et les micro-ondes qu'il produit en modifiant l'impédance du guide optique 13. Il impose donc une émission pulsée de la lumière du laser qui fait travailler l'appareil selon la méthode pompe-sonde qui offre un rapport signal sur bruit plus élevé.

L'utilisation de cet émetteur 23 n'est cependant que facultative, et d'autres éléments décrits jusqu'ici de l'appareil pourraient aussi être omis ou remplacés. Le guide optique 13 pourrait être remplacé par un réseau de fibres optiques ; les micro-lasers 4, supposés jusqu'ici en contact optique direct avec les couches photo-conductrice 5 en étant posés sur ces couches ou sur un substrat transparent de ces couches, pourraient être séparés d'elles par un système de concentration optique.

Il est possible et avantageux de disposer tout l'appareil sur une plaquette P de circuit intégré ; à défaut, le récepteur 2 et l'émetteur 1 peuvent être disposés sur des plaquettes séparées.

L'appareil fonctionne donc quand une lumière provenant de la diode-laser 12 parvient aux micro-lasers 4, la porte opto-électronique 19 ayant été ouverte : le micro-laser 4 de l'émetteur 1 illumine une portion de la couche photo-conductrice 5 mitoyenne aux parties 6 et 7 de l'antenne 3, ce qui crée un court-circuit entre elles et l'émission d'un train d'ondes électromagnétiques par l'antenne 3 de l'émetteur 1. Ce train est réfléchi par le milieu à étudier ou par un miroir situé derrière ce milieu vers l'antenne 3 du récepteur 2. Il est alors recueilli sous forme d'un signal électrique quand le micro-laser 4 du récepteur 2, placé de la même façon que celui de l'émetteur 1 par rapport à la couche photo-conductrice 5 et aux parties 6 et 7 de l'antenne 3, met ces parties en court-circuit : le courant créé par le train d'ondes passe par les lignes de connexion 22, l'étage amplificateur 21 et aboutit au microprocesseur 20. Le dispositif représenté à la figure 1 permet d'échantillonner le signal reçu, grâce aux lignes à retard optique 16 qui illuminent le micro-laser 4 à des instants successifs et servent donc à prélever des portions différentes du train d'ondes reçu. Les courants engendrés par ces portions de signal passent par la ligne de connexion 22 respective qui aboutit devant la ligne à retard optique 16 active à cet instant.

La photo-diode 12 peut émettre continûment sous l'impulsion de l'alimentation électrique 11, mais cela n'a pas d'effet tant que la porte opto-électronique 19 est fermée ; on choisit de commander cette porte pour l'ouvrir périodiquement et émettre ainsi une succession de trains d'ondes entre lesquels la réception et l'enregistrement des signaux peut avoir lieu.

Une variante de fonctionnement consiste à faire émettre la diode-laser 12 de façon pulsée, au moyen d'une commande appropriée de l'alimentation électrique 11 par le système de commande 18.

L'intégration des micro-lasers 4 à l'émetteur 1 et au récepteur, en les rendant solidaires des couches photo-conductrices 5, permet de les employer sans difficulté et sans réglage de position ou de distance focale, même si l'émetteur et le récepteur sont déplacés d'un essai à l'autre. De plus, les micro-lasers se prêtent à l'émission de trains d'ondes de très courte durée, d'une ou deux picosecondes par exemple, alors que des durées de six picosecondes sont données dans le brevet antérieur US 4 855 749 où un laser classique est utilisé. Il en résulte que des excitations à plus hautes fréquences sont faites ici, et qu'il est plus souvent possible de disposer l'émetteur 1 et le récepteur 2 confondus si on le souhaite : on aurait alors un seul substrat porteur d'antenne et de micro-laser, auquel aboutiraient toutes les lignes électriques et optiques de la figure 1 : la réception serait entreprise après l'émission. Il faut simplement que le train d'ondes émis parcoure un trajet suffisamment long pour ne revenir à l'émetteur-récepteur qu'après la fin de l'émission.

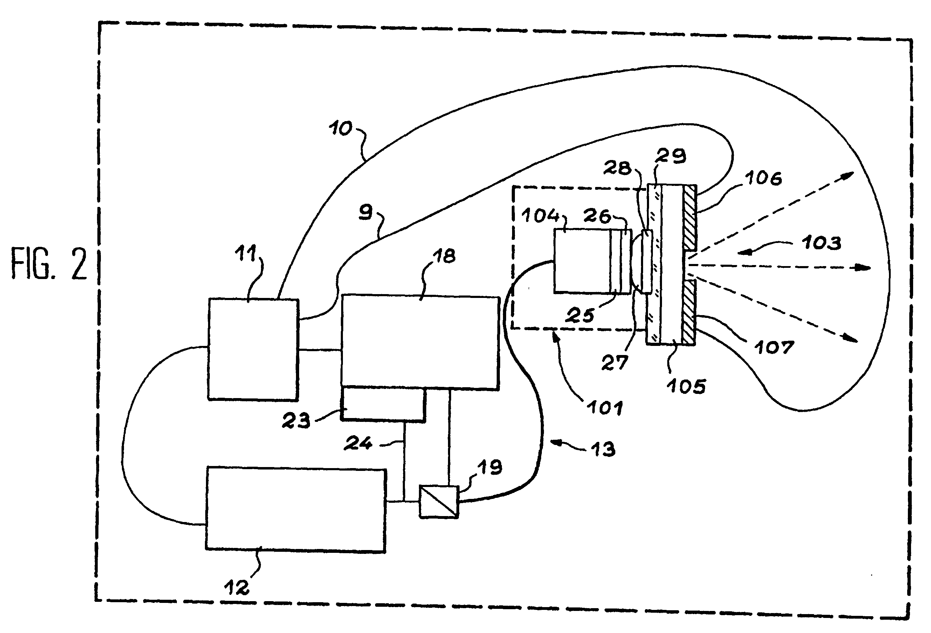

La figure 2 illustre une unité émettrice 101 d'une réalisation un peu différente de l'appareil ; l'unité réceptrice pourrait être construite de la même façon ou avec un échantillonneur de signaux analogue à celui de la figure 1 -où il est aussi facultatif.

L'antenne 103 est encore déposée sur une couche photo-conductrice 105, et un micro-laser 104 est situé derrière cette couche 105, dont il est séparé par un empilement de composants : on trouve successivement un déclencheur optique 25 devant le micro-laser 104, une couche semi-réfléchissante 26, une micro-lentille 27 ou un autre dispositif de concentration de lumière, une couche d'adaptation d'impédance 28 et enfin une couche transparente et isolante 29 (pouvant être en saphir ou silice) en contact avec la couche photo-conductrice 105 et qui lui sert de substrat.

Le déclencheur optique 25 est une couche en Bis(4-diméthylaminodithiobenzyl)nickel servant à fournir le flux de puissance lumineuse du micro-laser 104 au bout de l'empilement des couches ; la couche semi-réfléchissante 26 évite les retours de lumière vers le micro-laser 104 et ferme ainsi sa cavité oscillatrice tout en évitant des pertes de rayonnement, des dommages de l'appareillage de commande par les retours de lumière et même des queues du train d'ondes produites par double réflexion et qui perturberaient les mesures ; la micro-lentille 27 de concentration du flux de lumière vers la zone d'intérêt de la couche photo-conductrice 105 peut être une couche de polymère tel qu'une résine "photoresist" fondue décrite aux pages 1322 à 1324 du numéro de juin 1993 d'Optical Engineering ; et la couche d'adaptation d'impédance 28 a pour but de supprimer les réflexions de l'impulsion lumineuse du micro-laser 104 produites devant la couche 29.

La micro-lentille 27 remplace les lentilles ordinaires, habituellement utilisées avec les lasers pour concentrer leur faisceau sur la cible. Comme elle est intégrée à l'émetteur 101 ou au récepteur 102, elle est indéréglable. La concentration du faisceau du micro-laser 4 à l'entre-deux des parties 6 et 7 de l'antenne 3 permet de modérer l'intensité lumineuse totale à fournir, et d'autant plus que la distance focale de la micro-lentille 27 est très courte. Il faut aussi remarquer que l'intensité du train d'ondes transmis dépend aussi fortement de la matière de la couche photo-conductrice 105, et que le silicium dopé à l'oxygène, classique pour cette application, peut avantageusement être remplacé par le tellurure de cadmium et l'arséniure de gallium déjà cités, à condition du moins de les fabriquer en les faisant croître à faible température pour qu'ils ne donnent pas un monocristal : le tellurure de cadmium est alors formé en polycristal, et l'arséniure de gallium contient des inclusions d'arsenic presque pur. Ces hétérogénéités de structure favorisent la mobilité des électrons dans le cristal et donc la conductivité. On s'attend à retrouver ces avantages dans d'autres cristaux non monocristallins, encore faciles à fabriquer par l'utilisation d'une température de croissance insuffisante pour un recuit parfait. On peut obtenir des courants cent fois plus importants (100 pA au lieu d'l pA) dans l'antenne 3 en recourant à de telles matières.

Les portions conductrices et séparées 106 et 107 de l'antenne 103 sont encore des bandes disposées côte à côte pour définir une structure dipolaire ou peuvent être spirales, hélicoïdales, etc. selon l'application considérée et la bande de fréquences utile. Ici, le rayonnement électromagnétique est émis perpendiculairement aux bandes.

Le système de commande n'est pas modifié par rapport à la figure 1, et l'émetteur 101 et le récepteur 102 peuvent être ou non sur une même plaquette de support.

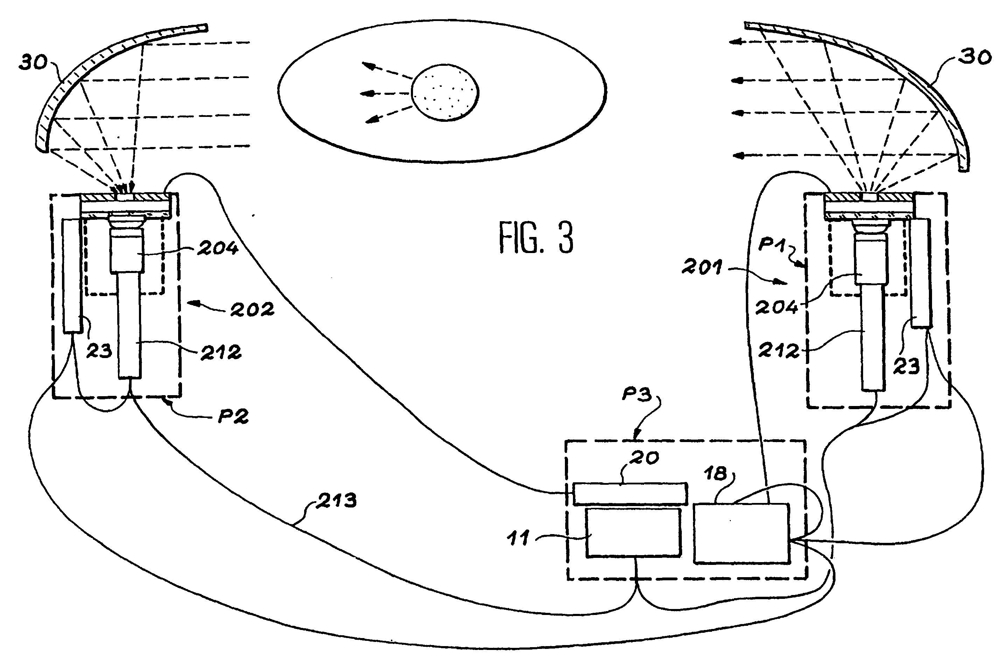

La figure 3 montre que les appareils des figures 1 et 2 se prêtent à d'autres modifications : l'émetteur 201 et le récepteur 202 sont tout d'abord séparés pour permettre l'examen d'un milieu gazeux intermédiaire sans réflexion d'ondes dans ce milieu (on préférera souvent au contraire étudier les milieux solides avec une réflexion du train d'ondes : le dispositif de la figure 1 ou un dispositif à l'émetteur et au récepteur confondus seront alors employés). Il est alors possible de remplacer la diode-laser 12 par une paire de diodes-lasers 212 dont chacune est située juste derrière le micro-laser 204, et le guide optique, portant ici la référence 213, relie l'alimentation électrique 11 à chacune des diodes-lasers 212. Cette disposition n'est cependant pas obligatoire, et on pourrait recourir à une diode-laser unique comme à la figure 1, qui serait intégrée soit à la plaquette de support (P1) de l'émetteur, soit à celle (P2) du récepteur, soit à une plaquette (P3) de support des composants de commande. Ce guide optique serait alors conçu en conséquence et pourrait ne comprendre qu'une fibre optique reliant les plaquettes P1 et P2 de l'émetteur et du récepteur. Une émission libre de lumière de laser d'une plaquette à une autre, sans fibre optique, est aussi concevable. Les lignes électriques d'alimentation, de commande et d'enregistrement dépendent aussi de la disposition précise des éléments de l'appareil.

Il est possible de disposer l'émetteur 201, le récepteur 202 et leurs antennes 3 en alignement, pour que les ondes soient transmises directement de l'une à l'autre ; on peut aussi, comme cela est représenté ici, disposer des réflecteurs 30 paraboliques ou ellipsoïdaux devant les antennes 3 pour transformer les ondes divergentes émises par les antennes 3 en ondes parallèles ou focalisées autrement traversant le milieu d'étude.

Il est aussi à noter que les couches photo-conductrices et les antennes de l'émetteur 201 et du récepteur 202 sont disposées face à face, ou que les faisceaux des micro-lasers 204 qui les excitent sont à peu près colinéaires (en tenant compte des réflexions produites par les réflecteurs 30) : l'avantage est que le train d'ondes émis de l'émetteur 201 s'épanouit de façon à peu près isotrope en quittant tout de suite l'émetteur 201, traverse le milieu gazeux d'étude avec un front uniforme et arrive au récepteur 202 à un même instant : la situation est différente dans la situation de la figure 1, où l'émetteur 1 et le récepteur 2 sont coplanaires, car le train d'ondes possède alors une composante X qui s'épanouit dans le plan commun à l'émetteur 1 et au récepteur 2 et une composante Y qui s'épanouit dans un plan orthogonal : ces composantes X et Y se propagent dans la même direction Z de la figure mais sont légèrement déphasées et produisent donc un signal moins net sur le récepteur 202. Il faut considérer cet inconvénient et le mettre en balance avec la simplicité de construction du dispositif de la figure 1, à plaquette P unique, pour choisir cette construction ou celle de la figure 3.

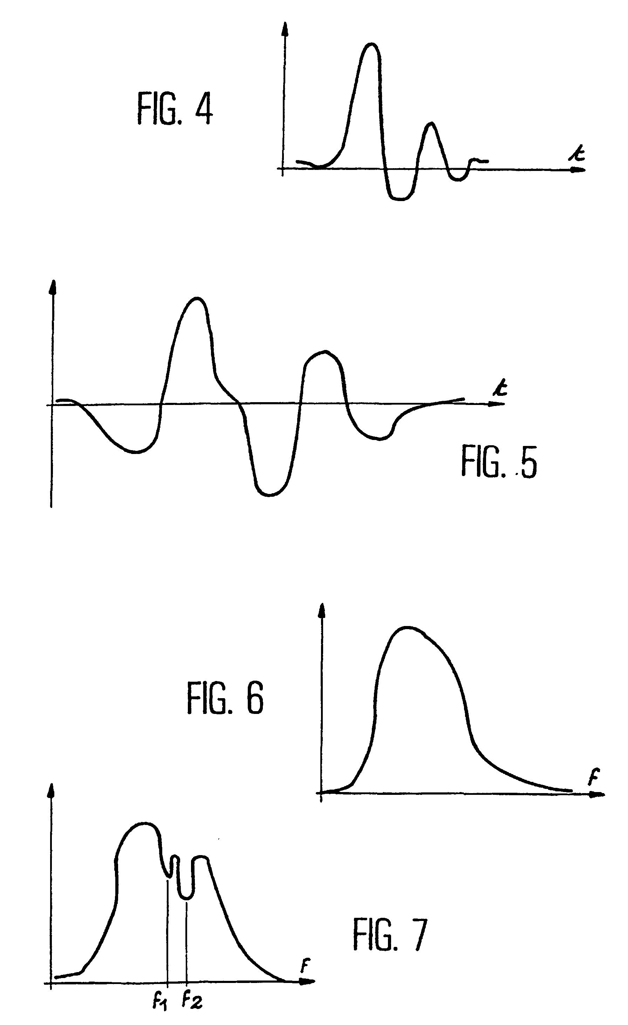

La figure 4 donne l'allure d'un train d'ondes électromagnétiques émis par l'antenne de l'unité émettrice 1, 101 ou 201 en fonction du temps. La transformée de Fourier de ce train d'ondes montre qu'il se décompose en une gamme de fréquences étendue (sur l'axe des abscisses) comme le représente la figure 6. Le signal reçu par l'antenne du récepteur 2, 102 ou 202 et perturbé par atténuation ou réflexion à travers le milieu d'étude peut être celui qui est représenté à la figure 5. Sa transformée de Fourier est donnée à la figure 7 ; elle est exploitée de manière habituelle et peut en particulier révéler des pics d'absorption révélateurs de l'état du milieu étudié et notamment de la présence de certains gaz. L'exemple représenté illustre deux de ces pics aux fréquences f1 et f2.

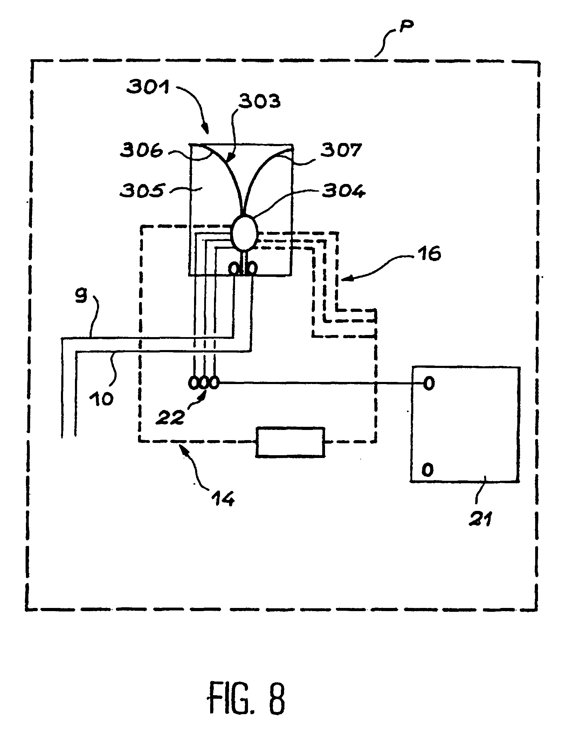

La figure 8 illustre enfin un exemple d'émetteur-récepteur 301 unique, conformément à une partie précédente de cette description : l'émetteur et le récepteur sont confondus, et l'émetteur-récepteur possède une antenne 303 composée de deux parties métalliques 306 et 307 sur une couche photo-conductrice 305, et un micro-laser 304 crée un court-circuit entre elles ; les lignes 9, 10, 14, 15 et 22 décrites à propos de la figure 1 y aboutissent de la même façon, et tout le reste de l'appareil est identique à celui de la figure 1, si ce n'est que le blindage 17 est omis.

## Revendications

1. Dispositif émetteur-récepteur d'ondes pour examiner un milieu traversé par les ondes, comprenant un émetteur (1, 101, 201) à antenne (3, 103) et un récepteur (2, 102, 202) à antenne (3, 103), un dispositif de génération d'ondes relié à l'émetteur et un dispositif de réception et d'exploitation de signaux relié au récepteur, les antennes étant formées de portions (6, 106, 7, 107) distinctes et disposées sur une couche photo-conductrice (5, 105), le dispositif de. génération d'ondes comprenant une alimentation électrique (11) instaurant une différence de potentiel entre les portions de l'antenne de l'émetteur, et les dispositifs de génération d'ondes et de réception et d'exploitation de signaux comprenant des moyens (12, 19, 4) de fourniture d'impulsions lumineuses aux couches photo-conductrices (5, 105) entre lest portions des antennes (3, 103), **caractérisé en ce que** les moyens de fourniture d'impulsions lumineuses comprennent des micro-lasers (4, 104) solidaires des couches photo-conductrices et **en ce que** les couches photo-conductrices (5, 105) sont en un cristal non monocristallin.

2. Dispositif selon la revendication 1, **caractérisé en ce que** les moyens de fourniture d'impulsions lumineuses comprennent des micro-lentilles (27) de concentration des impulsions lumineuses entre les couches photo-conductrices et les micro-lasers.

3. Dispositif selon la revendication 2, **caractérisé en ce que** des couches anti-reflet (26) sont intercalées entre les micro-lasers et les micro-lentilles (27).

4. Dispositif selon la revendication 3, **caractérisé en ce que** des couches d'adaptation d'impédance optique (28) sont intercalées entre les micro-lentilles (27) et les couches photo-conductrices (5, 105).

5. Dispositif selon la revendication 1, **caractérisé en ce que** le cristal est un polycristal de tellurure de cadmium.

6. Dispositif selon la revendication 1, **caractérisé en ce que** le cristal est en arséniure de gallium pourvu d'inclusions riches en arsenic.

7. Dispositif selon la revendication 1, **caractérisé en ce que** les impulsions lumineuses ont une durée d'au plus 2 ps.

8. Dispositif selon la revendication 7, **caractérisé en ce que** le récepteur est confondu avec l'émetteur.

9. Dispositif selon la revendication 1, **caractérisé en ce que** les moyens de fourniture d'impulsions lumineuses comprennent des lignes de retard optique (16) entre un dispositif générateur des impulsions lumineuses (12) et le récepteur (2, 102, 202).

10. Dispositif selon la revendication 9, **caractérisé en ce que** les lignes de retard optique (16) possèdent des retards différents et que les dispositifs de réception et d'exploitation des signaux comprennent des lignes de connexion (22) aptes à échantillonner des signaux reçus par le récepteur (2, 102, 202).

11. Dispositif selon la revendication 1, **caractérisé en ce qu'**il comprend des réflecteurs (30) sur un chemin de rayonnement d'ondes entre l'émetteur et le récepteur.

12. Dispositif selon la revendication 1, **caractérisé en ce que** l'émetteur et le récepteur sont disposés sur des plaquettes.

13. Dispositif selon la revendication 12, **caractérisé en ce que** les plaquettes de l'émetteur et du récepteur se font face.

14. Dispositif selon la revendication 13, **caractérisé en ce que** l'émetteur (1) et le récepteur (2) sont disposés côte à côte sur une plaquette unique (P), avec un blindage électromagnétique mitoyen (17) entre eux, les antennes (3) étant orientées dans des directions parallèles.

15. Dispositif selon la revendication 1, **caractérisé en ce que** les moyens de fourniture d'impulsions lumineuses comprennent un laser (12).

16. Dispositif selon la revendication 15, **caractérisé en ce qu'**il comprend une alimentation électrique (11) unique et commune au moins au laser (12) et aux portions (6, 7, 106, 107) de l'antenne (3, 103) de l'émetteur (1, 101, 201).

17. Dispositif selon la revendication 1, **caractérisé en ce que** les moyens de fourniture d'impulsions lumineuses comprennent un générateur de lumière (12) et une porte (19) de coupure et de transmission alternatives de la lumière.

18. Dispositif selon la revendication 17, **caractérisé en ce que** la porte (19) est un composant à changement d'indice optique en fonction d'un champ électrique.

19. Dispositif selon la revendication 1, **caractérisé en ce que** les moyens de fourniture d'impulsions lumineuses comprennent un réseau de guidage de lumière (13) présentant une bifurcation vers l'émetteur et vers le récepteur.

20. Dispositif selon la revendication 19, **caractérisé en ce qu'**il comprend des moyens (23, 24) de variation d'impédance optique du réseau de guidage de lumière (13).

## Patentansprüche

1. Sende- und Empfangsvorrichtung, um ein von den Wellen durchquertes Medium zu untersuchen, einen Sender (1, 101, 201) mit Antenne (3, 103) und einen Empfänger (2, 102, 202) mit Antenne (3, 103) umfassend sowie eine Wellenerzeugungseinrichtung, verbunden mit dem Sender, und eine Empfangs- und Auswertungseinrichtung der Signale, verbunden mit dem Empfänger, wobei die Antennen durch unterschiedliche Teilstücke (6, 106, 7, 107) gebildet werden, angeordnet auf einer Photoleiter-Schicht (5, 105), die Wellenerzeugungseinrichtung eine elektrische Versorgung (11) umfasst, die eine Potentialdifferenz zwischen den Teilstücken der Antenne des Senders herstellt, und die Wellenerzeugungs- und die Empfangs- und Auswertungseinrichtungen der Signale Einrichtungen (12, 19, 4) zum Liefern von Lichtimpulsen an die Photoleiter-Schichten (5, 105) zwischen den Teilstücken der Antennen (3, 103) umfassen,
**dadurch gekennzeichnet,**
**dass** die Einrichtungen zum Liefern der Lichtimpulse Mikrolaser (4, 104) umfassen, fest verbunden bzw. aus einem Stück mit den Photoleiter-Schichten, und dass die Photoleiter-Schichten (5, 105) aus einem nicht-monokristallinen Kristall sind.

2. Vorrichtung nach Anspruch 1, **dadurch gekennzeichnet, dass** die Einrichtungen zum Liefern der Lichtimpulse Mikrolinsen (27) zur Konzentration der Lichtimpulse zwischen den Photoleiter-Schichten und den Mikrolasern umfassen.

3. Vorrichtung nach Anspruch 2, **dadurch gekennzeichnet, dass** Antireflex-Schichten (26) zwischen den Mikrolasern und den Mikrolinsen (27) eingefügt sind.

4. Vorrichtung nach Anspruch 3, **dadurch gekennzeichnet, dass** Schichten zur Anpassung der optischen Impedanz (28) zwischen den Mikrolinsen (27) und den Photoleiter-Schichten (5, 105) eingefügt sind.

5. Vorrichtung nach Anspruch 1, **dadurch gekennzeichnet, dass** der Kristall ein Cadmiumtellurid-Polykristall ist.

6. Vorrichtung nach Anspruch 1, **dadurch gekennzeichnet, dass** der Kristall aus Galliumarsenid mit arsenreichen Einschlüssen ist.

7. Vorrichtung nach Anspruch 1, **dadurch gekennzeichnet, dass** die Lichtimpulse eine Dauer von höchstens 2 ps haben.

8. Vorrichtung nach Anspruch 7, **dadurch gekennzeichnet, dass** der Empfänger mit dem Sender zusammenfällt.

9. Vorrichtung nach Anspruch 1, **dadurch gekennzeichnet, dass** die Einrichtungen zum Liefern der Lichtimpulse optische Verzögerungsleitungen (16) zwischen einer Vorrichtung zur Erzeugung von Lichtimpulsen (12) und dem Empfänger (2, 102, 202) umfassen.

10. Vorrichtung nach Anspruch 9, **dadurch gekennzeichnet, dass** die optischen Verzögerungsleitungen (16) unterschiedliche Verzögerungen aufweisen, und dass die Empfangs- und Auswertungseinrichtungen der Signale Verbindungsleitungen (22) umfassen, fähig die durch den Empfänger (2, 102, 202) empfangenen Signale abzutasten.

11. Vorrichtung nach Anspruch 1, **dadurch gekennzeichnet, dass** sie Reflektoren (30) umfasst, angeordnet auf einem Wellenausstrahlungsweg zwischen dem Sender und dem Empfänger.

12. Vorrichtung nach Anspruch 1, **dadurch gekennzeichnet, dass** der Sender und der Empfänger auf Platten angeordnet sind.

13. Vorrichtung nach Anspruch 12, **dadurch gekennzeichnet, dass** die Platten des Senders und des Empfängers sich gegenüberstehen.

14. Vorrichtung nach Anspruch 13, **dadurch gekennzeichnet, dass** der Sender (1) und der Empfänger (2) Seite an Seite auf einer einzigen Platte (P) angeordnet sind, mit einer gemeinsamen elektromagnetischen Abschirmung zwischen ihnen, wobei die Antennen (3) parallel ausgerichtet sind.

15. Vorrichtung nach Anspruch 1, **dadurch gekennzeichnet, dass** die Einrichtungen zum Liefern der Lichtimpulse einen Laser (12) umfassen.

16. Vorrichtung nach Anspruch 15, **dadurch gekennzeichnet, dass** sie eine einzige elektrische Versorgung (11) für wenigstens den Laser (12) und die Teilstücke (6, 7, 106, 107) der Antenne (3, 103) des Senders (1, 101, 201) umfasst.

17. Vorrichtung nach Anspruch 1, **dadurch gekennzeichnet, dass** die Einrichtungen zum Liefern der Lichtimpulse einen Lichtgenerator (12) und ein Steuertor (19) zum abwechselnden Unterbrechen und Durchlassen des Lichts umfassen.

18. Vorrichtung nach Anspruch 17, **dadurch gekennzeichnet, dass** das Steuertor (19) ein optisches Bauteil ist, dessen Brechzahl sich in Abhängigkeit von einem elektrischen Feld verändert.

19. Vorrichtung nach Anspruch 1, **dadurch gekennzeichnet, dass** die Einrichtungen zum Liefern der Lichtimpulse ein Lichtleitnetz (13) mit einer Gabelung in Richtung Sender und in Richtung Empfänger umfassen.

20. Vorrichtung nach Anspruch 19, **dadurch gekennzeichnet, dass** sie Einrichtungen (23, 24) zum Variieren der optischen impedanz des Lichtleitnetzes (13) umfasst.

## Claims

1. Wave emitter-receiver device for examining a medium through which waves pass, comprising an emitter (1, 101, 201) with an antenna (3, 103) and a receiver (2, 102, 202) with an antenna (3, 103), a wave generation device connected to the emitter and a signal reception and usage device connected to the receiver, the antennas being formed of distinct portions (6, 106, 7, 107) laid out on a photo-conducting layer (5, 105), the wave generation device comprising an electricity power supply (11) creating a potential difference between the portions of the emitter antenna, and wave generation and signal reception and usage devices comprising means (12, 19, 4) of supplying light pulses to the photo-conducting layers (5, 105) between portions of antennas (3, 103), **characterized in that** the means of supplying light pulses comprise micro-lasers (4, 104) fixed to the photo-conducting layers and that the photo-conducting layers (5, 105) are of non-monocrystalline crystal.

2. Device according to claim 1, **characterized in that** the means of generating light pulses comprise micro-lenses (27) concentrating light pulses between the photo-conducting layers and the micro-lasers.

3. Device according to claim 2, **characterized in that** the anti-reflection layers (26) are inserted between the micro-lasers and the micro-lenses (27).

4. Device according to claim 3, **characterized in that** the optical impedance adaptation layers (28) are inserted between the micro-lenses (27) and the photo-conducting layers (5, 105).

5. Device according to claim 1, **characterized in that** the crystal is a cadmium telluride polycrystal.

6. Device according to claim 1, **characterized in that** the crystal is a gallium arsenide crystal in which arsenic rich inclusions are formed.

7. Device according to claim 1, **characterized in that** the duration of the light pulses is greater than 2 ps.

8. Device according to claim 7, **characterized in that** the receiver is combined with the emitter.

9. Device according to claim 1, **characterized in that** the light pulse supply means comprise optical delay lines (16) between a device generating light pulses (12) and a receiver (2, 102, 202).

10. Device according to claim 9, **characterized in that** the optical delay lines (16) have different delays and the signal reception and usage devices comprise connection lines (22) capable of sampling signals received by the receiver (2, 102, 202).

11. Device according to claim 1, **characterized in that** it comprises reflectors (30) on a wave radiation path between the emitter and the receiver.

12. Device according to claim 1, **characterized in that** the emitter and the receiver are located on boards.

13. Device according to claim 12, **characterized in that** the emitter and receiver boards are facing each other.

14. Device according to claim 13, **characterized in that** the emitter (1) and the receiver (2) are located side by side on a single board (P) with electromagnetic shielding (17) between them, the antennas (3) being oriented in parallel directions.

15. Device according to claim 1, **characterized in that** the light pulse supply means comprise a laser (12).

16. Device according to claim 15, **characterized in that** it comprises a single and common electricity power supply (11) with at least one laser (12) and portions (6, 7, 106, 107) of the antennas (3, 103) of the emitter (1, 101, 201).

17. Device according to claim 1, **characterized in that** the light pulse supply means comprise a light generator (12) and an alternating light cut-off and transmission gate (19).

18. Device according to claim 17, **characterized in that** the gate (19) is a component that changes the optical index as a function of an electric field.

19. Device according to claim 1, **characterized in that** the light pulse supply means comprise a light guide network (13) with a fork towards the emitter and the receiver.

20. Device according to claim 19, **characterized in that** it comprises means (23, 24) of varying the optical impedance of the light guide network (13).
